# EUROPEAN PATENT APPLICATION

(11) **EP 1 052 162 A2**
(43) Date of publication of application: **15.11.2000**
(21) Application number: 00303654.8
(22) Date of filing: 28.04.2000
(51) Int. Cl.: B62D 21/15

(54) **Motor vehicle assembly**

(30) Priority: 10.05.1999 GB 9910632; 18.08.1999 GB 9919414
(71) Applicant: ROVER GROUP LIMITED, Warwick, Warwickshire CV34 6RG (GB)
(72) Inventor: Garrish, Martin George, Bicester, Oxfordshire OX6 9YH (GB)
(74) Representative: Schernhammer, Herbert

(57) **Abstract**

A motor vehicle longitudinal 2 is disclosed comprising a tubular member 10, a capping member 12 secured to the tubular member and a structural foam body 14 located between the tubular member and the capping member. This concentrates an area of maximum loading at a top surface of the motor vehicle longitudinal 2. This leads to an improved absorption of crash energy by the motor vehicle longitudinal.

## Description

The present invention relates to a motor vehicle longitudinal of the kind adapted to absorb impacts directed along a longitudinal axis of a motor vehicle. Such motor vehicle longitudinals are sometimes also referred to as longitudinally extending load bearing members.

It will be understood that such motor vehicle longitudinals are not to be confused with other longitudinally extending members present within a motor vehicle, such as sills or longitudinal reinforcing elements for a door. The door elements, in particular, being adapted primarily to absorb impacts lateral or transverse to the longitudinal axis of the motor vehicle.

It is known to construct a motor vehicle longitudinal as a tubular member having a generally distended "Z" shape. An upper limb of the longitudinal extends in the direction of a front end of a motor vehicle within an engine compartment, while a lower limb of the longitudinal extends beneath and is connected to a floor of a passenger cell of the motor vehicle. The upper limb comprises a crumple zone adapted to absorb the energy of a frontal impact along a longitudinal axis of the motor vehicle. An intermediate portion of the longitudinal extends between the upper and lower limbs of the longitudinal.

It is known to construct a motor vehicle longitudinal from a generally "U" shaped channel member with a covering member secured across the free ends of the channel member to close the channel member.

It is a disadvantage of the motor vehicle longitudinal described above that energy absorption is limited to the crumple zone formed by the forwardly extending upper limb of the longitudinal. When the crumple zone has been used, the longitudinal will tend to form a plastic hinge between the intermediate portion of the longitudinal and the lower limb.

The formation of the plastic hinge is a problem for two reasons. Firstly, the formation of a hinge is not an efficient energy absorbing mechanism. Secondly, the compressed upper limb of the longitudinal together with the intermediate portion of the longitudinal, pivoting about the hinge, will be directed toward the passenger cell of the motor vehicle. There is a danger that the compressed upper limb of the longitudinal together with the intermediate portion of the longitudinal will be driven trough a bulkhead separating the passenger cell from the engine compartment and into the passenger cell. This is clearly undesirable.

According to a first aspect of the present invention, a motor vehicle longitudinal comprises a tubular member and a capping member secured to the tubular member characterised in that the longitudinal further comprises a structural foam body located between the tubular member and the capping member.

This has as an advantage that the crumple zone of the longitudinal is continued through the intermediate portion of the longitudinal.

The invention will now be described, by way of example only, with reference to the accompanying drawings, in which:
Figure 1 shows a section of a longitudinal according to the present invention along line I-I of Figure 2;
Figure 2 shows a side view of an undeformed longitudinal in accordance with the present invention;
Figure 3 shows a side view of the longitudinal of Figure 2 in which an upper limb has been crumpled;
Figure 4 shows a side view of the longitudinal of Figure 3 subject to further deformation;
Figure 5 shows a side view of the longitudinal of Figure 4 subject to still further deformation;
Figure 6 shows a side view of the longitudinal of Figure 5 subject to yet further deformation; and
Figure 7 shows in section a second embodiment of a longitudinal member in accordance with the present invention.

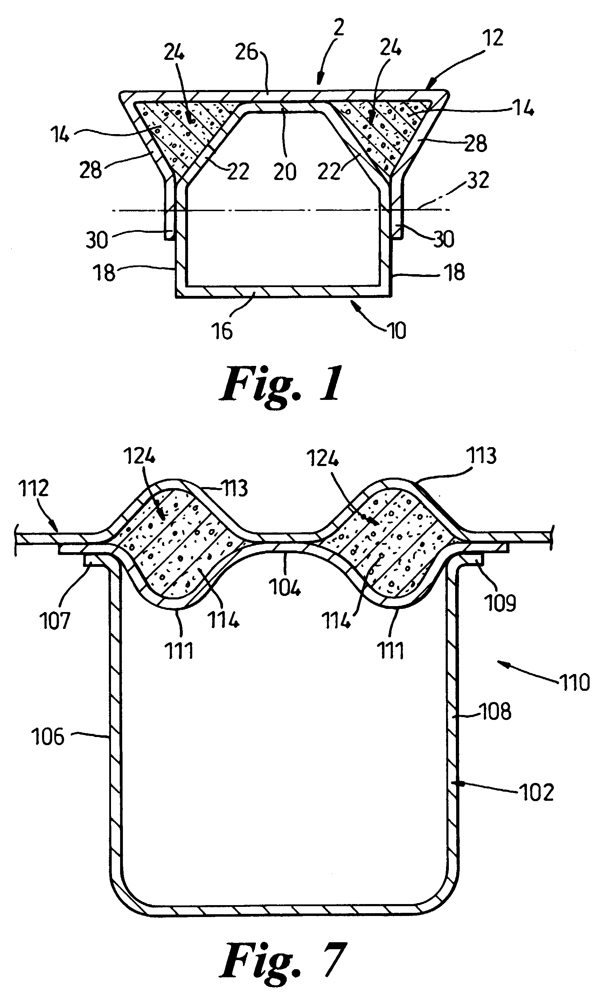

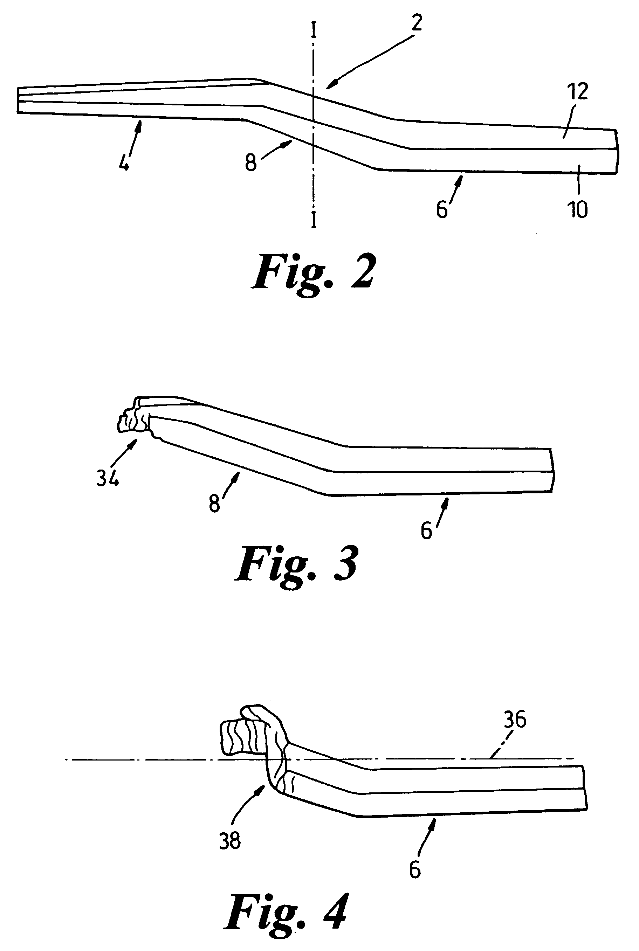

Referring first to Figures 1 and 2, there is shown a motor vehicle longitudinal 2 in accordance with the present invention. The longitudinal has an upper limb 4, a lower limb 6 and an intermediate portion 8 therebetween. The motor vehicle longitudinal 2 comprises a tubular member 10, a capping member 12 secured to the tubular member and at least one structural foam body 14 located between the tubular member and the capping member.

Conveniently, the tubular member 10 may be formed as a hydroformed member. Conveniently, both the tubular member 10 and the capping member 12 are each formed from a steel material. The tubular member and the capping member may be secured to one another by any suitable means, for example by welding.

The tubular member 10 has a generally distended "Z" shape comprising an upper limb, an intermediate portion and a lower limb. The tubular member 10 in cross section comprises along its length a generally horizontal base portion 16, substantially parallel side walls 18 extending upwardly from the base portion 16, an upper portion 20 extending substantially parallel to the base portion and angled walls 22 joining the upper portion to each of the side walls.

The capping member 12 may conveniently only extend over the intermediate portion and an adjacent part of the lower limb of the tubular member to define a cavity 24 therebetween. The capping member 12 comprises a generally horizontal web 26, inwardly directed wings 28 depending from each side of the web and generally vertical flanges 30 depending from ends of the wings 28 remote from the web 26.

Preferably, the capping member is connected to the tubular member along a neutral axis 32 of the tubular member. Conveniently, the capping member 12 may connected to the tubular member 10 by carbon dioxide welding. Additionally, the capping member 12 may be connected to the tubular member 10 by joining of the horizontal web 26 of the capping member to the upper portion 20 of the tubular member. This may be performed by any suitable means, for example by tack welding.

The structural foam body 14 is located in the cavity 24 formed between the tubular member 10 and the capping member 12. It will be understood that the structural foam body may comprise two separate foam bodies, each foam body being located in the cavity formed at each side of the motor vehicle longitudinal 2, as shown in the illustrated embodiment. The structural foam body 14 may be formed in situ between the tubular member 10 and the capping member 12. Alternatively, the structural foam body 14 may formed to the required shape and located within the capping member 12 prior to the capping member 12 being secured to the tubular member 10.

The operation of the motor vehicle longitudinal 2 in absorbing frontal impact energy will now be described with reference to Figures 2 to 6.

Prior to impact, the upper limb 4 of the motor vehicle longitudinal extends in the direction of a front end of a motor vehicle within an engine compartment of a motor vehicle, while the lower limb of the motor vehicle longitudinal extends beneath and is connected to a floor (not shown) of a passenger cell of the motor vehicle (Figure 2).

On impact, the deformation of the motor vehicle longitudinal passes through a number of stages to absorb an associated energy of an impact. Once the energy has been absorbed no further deformation will be caused by the impact.

The first stage of absorption of the impact energy comprises crumpling of the upper limb 4 in a known manner to form an initial crumple zone 34 (Figure 3).

Surprisingly, while there is some small bending of the motor vehicle longitudinal between the intermediate portion 8 and the lower limb 6 of the motor vehicle longitudinal, a plastic hinge does not form in the motor vehicle longitudinal. This is believed to be due to the presence of the structural foam body in the cavities 24. In particular, this is believed to concentrate an area of maximum loading at a top surface of the motor vehicle longitudinal 2. As a result, the motor vehicle longitudinal continues to crumple along the intermediate portion 8 along a motor vehicle longitudinal axis 36 of the motor vehicle longitudinal, that is the initial crumple zone 34 continues into an extended crumple zone 38 (Figure 4).

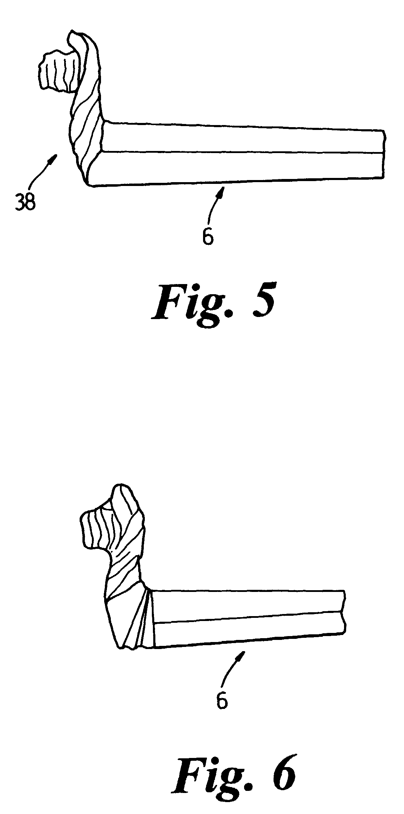

The extended crumple zone 38 is developed and extends along the length the intermediate portion 8 as further impact energy is absorbed (Figure 5).

Finally, the crumple zone will be developed along the lower limb 6 of the motor vehicle longitudinal (Figure 6). The degree of crumple that the lower limb may undertake is limited by the presence of the passenger cell to which the motor vehicle longitudinal is secured.

By the use of a hydroformed tubular member having a wall thickness of 1.8 mm, a motor vehicle longitudinal in accordance with the present invention was found to absorb 200 KJ of crash energy.

A further embodiment of the invention is shown in section in Figure 7. A motor vehicle longitudinal of the kind adapted to absorb impacts directed along a longitudinal axis of a motor vehicle is shown. The longitudinal member described below is of the same generally distended "Z" shape as the previous embodiment.

A tubular member 110 comprises a channel member 102 and an upper member 104. The channel member 102 has an open section and is provided to a first side 106 with a first laterally extending flange 107 and to a second side 108 with a second laterally extending flange 109. The channel member 102 may be formed by stamping or by any other suitable forming method. The upper member 104 is adapted to fit over the channel member 102 to close the open section of the channel member 102 thereby to form the tubular member 110.

The upper member 104 is provided along at least a portion of its longitudinal length with means defining a plurality of formed recesses 111. In the illustrated embodiment, there are two such recesses extending longitudinally along at least a portion of the upper member 104. The upper member 104 may be formed by stamping or by any other suitable forming method.

The channel member 102 and the upper member 104 are secured together in the region of the first and second laterally extending flanges 107,109 of the channel member 102. The channel member 102 and the upper member 104 may be secured together by any suitable means, for example by welding.

A capping member 112 is provided to be secured to the tubular member 110. The capping member 112 extends over the upper member 104 of the tubular member 110. The capping member 112 has means defining a plurality of deformations 113 extending longitudinally along the capping member 112. The capping member 112 and the upper member 104 are so arranged that the means defining the plurality of recesses 111 and the means defining the plurality of deformations 113 are arranged to be mutually opposing or reciprocal. In this way a series of cavities 124 are formed between the capping member 112 and the tubular member 110.

The capping member 112 may conveniently only extend over the intermediate portion and an adjacent part of the lower limb of the tubular member 110. It will be understood that the recesses 111 formed in the upper member 104 need not be formed on that part of the upper member forming the upper limb of the tubular member 110.

At least a part of the capping member 112 may be formed from a portion of a vehicle floor pan. In particular that portion of the longitudinal comprising the intermediate portion and lower limb of the longitudinal may be formed from the floor pan of the vehicle. The tubular member 110 may be secured to the capping member 112 by any suitable means, for example by welding. The channel member 102, upper member 104 and capping member 112 may be secured to one another as part of a single operation.

At least one structural foam body 114 is located in each of the cavities 124 formed between the tubular member 110 and the capping member 112. As in the previous embodiment, the structural foam body 114 either may be formed in situ between the tubular member 110 and the capping member 112 or, alternatively, may be formed to the required shape and located between the capping member 112 and the upper member 104 of the tubular member 110 prior to the capping member 112 being secured to the upper member 104 of the tubular member 110.

## Claims

1. A motor vehicle longitudinal comprising a tubular member (10;110) and a capping member (12;112) secured to the tubular member (10;110) characterised in that the longitudinal (2;102) further comprises a structural foam body (14;114) located between the tubular member (10;110) and the capping member (12;112).

2. A longitudinal according to claim 1, the tubular member (10;110) having a generally distended "Z" shape comprising an upper limb (4), an intermediate portion (8) and a lower limb (6), characterised in that the capping member (12;112) is secured over only the intermediate portion (8) and an adjacent part of the lower limb (6) of the tubular member (10;110) to define at least one cavity (24;124) therebetween.

3. A longitudinal according to either claim 1 or claim 2, characterised in that the tubular member (10) in cross section comprises a generally horizontal base portion (16), substantially parallel side walls (18) extending upwardly from the base portion (16), an upper portion (20) extending substantially parallel to the base portion (16) and angled walls (22) joining the upper portion (20) to each of the side walls (18).

4. A longitudinal according to claim 3, characterised in that the capping member (12) comprises a generally horizontal web (26), inwardly directed wings (28) depending from each side of the web (26) and generally vertical flanges (30) depending from ends of the wings (28) remote from the web (26).

5. A longitudinal according to claim 4, characterised in that the capping member (12) is secured to the tubular member (10) by joining of the horizontal web (26) of the capping member (12) to the upper portion (20) of the tubular member (10).

6. A longitudinal according to any previous claim, characterised in that the tubular member (10) is a hydroformed tubular member.

7. A longitudinal according to either claim 1 or claim 2, characterised in that the tubular member (110) in cross section comprises a channel member (102) of open section and an upper member (104) adapted to close the section of the channel member (102).

8. A longitudinal according to claim 7, characterised in that the upper member (104) and the capping member (112) are provided with reciprocal means to define the at least one cavity (124).

9. A longitudinal according to claim 7 or claim 8, characterised in that the capping member (112) is a portion of a motor vehicle floor pan.

10. A longitudinal according to any of claims 2 to 9, characterised in that the structural foam body (14;114) fills the at least one cavity (24;124).

11. A longitudinal according to any previous claim, characterised in that the structural foam body (14;114) is formed between the tubular member (10;110) and the capping member (12;112).

12. A longitudinal according to any previous claim, characterised in that the structural foam body (14;114) is formed and located within the capping member (12;112) prior to the capping member (12;112) being secured to the tubular member (10;110).

13. A longitudinal according to any previous claim, characterised in that the capping member (12;112) is secured to the tubular member (10;110) along a neutral axis (32) of the tubular member (10;110).

14. A motor vehicle incorporating a longitudinal according to any previous claim.
